# EUROPÄISCHE PATENTSCHRIFT

(11) **EP 1 648 731 B1**
(45) Veröffentlichungstag und Bekanntmachung des Hinweises auf die Patenterteilung: **23.04.2008**
(21) Anmeldenummer: 04763378.9
(22) Anmeldetag: 20.07.2004
(51) Int. Cl.: B60K 23/08

(54) **STEUERSYSTEM FÜR EIN ZUMINDEST ZEITWEISE VIERRADGETRIEBENES KRAFTFAHRZEUG**
CONTROL SYSTEM FOR A VEHICLE WITH AT LEAST PART-TIME FOUR-WHEEL DRIVE
SYSTEME DE COMMANDE DESTINE A UN VEHICULE AUTOMOBILE AU MOINS TEMPORAIREMENT A TRACTION A QUATRE ROUES MOTRICES

(30) Priorität: 24.07.2003 DE 10333650
(43) Veröffentlichungstag der Anmeldung: 26.04.2006
(73) Patentinhaber: Bayerische Motoren Werke Aktiengesellschaft, 80809 München (DE)
(72) Erfinder: BILLIG, Christian, 80939 München (DE); FISCHER, Gerhard, 80992 München (DE)
(86) Internationale Anmeldenummer: PCT/EP2004/008146
(87) Internationale Veröffentlichungsnummer: WO 2005/009775

(56) Entgegenhaltungen:
- DE-A- 2 164 324
- DE-A- 3 741 009
- US-A- 5 461 568
- US-A- 6 007 454

## Beschreibung

Die Erfindung bezieht sich auf ein Steuersystem für ein zumindest zeitweise vierradgetriebenes Kraftfahrzeug nach dem Oberbegriff des Patentanspruchs 1.

Derartige Steuersysteme sind beispielsweise in der US 5,461,568, der US 6,007,454, der DE-A-2164324 und der DE 100 54 023 A1 beschrieben. Bekannt ist demnach eine Drehmomentverteilungseinrichtung zum Verändern des Drehmomentverteilungsverhältnisses zwischen den Rädern der Vorderachse und den Rädern der Hinterachse durch entsprechende Steuerung einer Reibungskupplung als Längssperre (Übertragungskupplung). Durch die Festlegung eines Drehmomentverteilungsverhältnisses kann das Fahrverhalten eines Fahrzeuges erheblich beeinflusst werden. Der Gegenstand der DE 100 54 023 A1 beschäftigt sich dabei insbesondere mit der Fahrdynamik bei Kurvenfahrt. Hierbei kann ein zeitweise vierradgetriebenes Kraftfahrzeug ein grundsätzlich vorderradangetriebenes Kraftfahrzeug mit über eine Übertragungskupplung zuschaltbarem Hinterradantrieb, ein grundsätzlich hinterradangetriebenes Kraftfahrzeug mit über eine Übertragungskupplung zuschaltbarem Vorderradantrieb oder ein Permanent-Allradfahrzeug mit regelbarer Übertragungskupplung zur Änderung der Drehmomentverteilung zwischen Vorder- und Hinterachse sein.

Im Folgenden werden diesbezüglich verallgemeinernd als primäre Antriebsräder die permanent mit der Antriebseinheit verbundenen Räder und als sekundäre Antriebsräder die über die Übertragungskupplung bedarfsweise mit der Antriebseinheit verbindbaren Räder bezeichnet.

Weiterhin weisen derartige bekannte Steuersysteme meist eine Steuerung der Übertragungskupplung in Abhängigkeit von der Drehzahldifferenz zwischen einer Drehzahl der primären Antriebsachse und der Drehzahl der sekundären Antriebsachse auf (z. B. DE 37 41 009 A1, DE 69304449 T2). Hierbei werden die Drehzahlen der Antriebsachsen z. B. mit eigenen Sensoren erfasst.

Es ist Aufgabe der Erfindung, ein Steuersystem eingangs genannter Art im Hinblick auf die Regelung zu verbessern.

Diese Aufgabe wird durch die Merkmale des Patentanspruchs 1 gelöst.

Der Erfindung liegt die Erkenntnis zugrunde, dass zum einen zusätzliche Drehzahlsensoren an den Antriebsachsen kostenintensiv sind und dass das Ausregeln eines Schlupfes zwischen den Antriebswellen aus Sicht der Fahrdynamikregelung zu ungenau ist. Die Genauigkeit des Schlupfregelungsprozesses lässt sich verkoppeln, wenn er abhängig von einem Einzelradschlupf bezogen auf alle vier Räder oder abhängig von einem Radschlupf zwischen den einzelnen Rädern jeweils einer Fahrzeug(längs)seite vorgenommen wird.

Erfindungsgemäß wird daher bei einem Steuersystem für ein zumindest zeitweise vierradgetriebenes Kraftfahrzeug mittels einer Steuereinheit, die den Radgeschwindigkeiten aller Räder proportionale Größen und die Fahrzeuggeschwindigkeit erfasst oder ermittelt, und durch die das Antriebsmoment einer Antriebseinheit auf primäre Antriebsräder, die permanent mit der Antriebseinheit verbunden sind, und auf sekundäre Antriebsräder, die bedarfsweise mit der Antriebseinheit verbindbar sind, variabel verteilbar ist, die Verstelleinheit einer zwischen der Antriebseinheit und den sekundären Antriebsrädern angeordneten Übertragungskupplung derart gesteuert, dass das Kupplungsmoment und somit das Antriebsmoment auf die sekundären Antriebsräder erhöht wird, wenn zwischen der Radgeschwindigkeit eines Rades und der Fahrzeuggeschwindigkeit eine Differenz erfasst wird und/oder wenn zwischen den beiden Radgeschwindigkeit der Räder zumindest einer Fahrzeug(längs)seite (links, rechts in Fahrtrichtung) eine Differenz erfasst wird.

Das Antriebsmoment ist das Ausgangsdrehmoment einer Antriebseinheit, die vorzugsweise aus einer Brennkraftmaschine und einem ihr nachfolgenden Getriebe besteht. Dazu gibt die Steuereinheit zur Kupplungsmomenterhöhung ein radschlupfabhängiges Soll-Kupplungsmoment vor, das abhängig vom Betrag der Differenz zwischen der Radgeschwindigkeit eines Rades und der Fahrzeuggeschwindigkeit und/oder vom Betrag der Differenz zwischen den beiden Radgeschwindigkeit der Räder zumindest einer Fahrzeugseite bestimmt wird.

Die der Radgeschwindigkeit eines Rades proportionale Größe ist vorzugsweise eine ohnehin erfasste Raddrehzahl, die in bekannter Weise in eine mit der Fahrzeuggeschwindigkeit direkt vergleichbare Radgeschwindigkeit in Metern pro Sekunde (v) umgerechnet werden kann.

Das radschlupfabhängige Soll-Kupplungsmoment wird vorzugsweise in der Steuereinheit durch eine Maximalauswahl aus zumindest ff. drei Soll-Kupplungsmomenten ermittelt: einem erstes Soll-Kupplungsmoment, das abhängig vom Betrag der Differenz zwischen der Radgeschwindigkeit eines Rades und der Fahrzeuggeschwindigkeit bestimmt wird, einem zweiten Soll-Kupplungsmoment, das abhängig vom Betrag der Differenz zwischen den beiden Radgeschwindigkeit der Räder der linken Fahrzeugseite bestimmt wird, und einem dritten Soll-Kupplungsmoment, das abhängig vom Betrag der Differenz zwischen den beiden Radgeschwindigkeit der Räder der rechten Fahrzeugseite bestimmt wird.

Der Vorteil des durch die Erfindung berücksichtigen Einzelradschlupfes liegt in der im Vergleich zum Stand der Technik verdoppelten Empfindlichkeit, mit der die Drehmomentverteilung geregelt werden kann. Dies ist besonders bei Kurvenfahrt günstig, da meist nur die kurveninneren Räder zum Durchdrehen neigen. Durch die Erfindung werden also auch eine Steigerung der Traktionseigenschaften und der Stabilitätseigenschaften eines Fahrzeuges erreicht.

In der Zeichnung ist ein Ausführungsbeispiel der Erfindung dargestellt. Es zeigt
- Fig. 1: schematisch ein zeitweise vierradgetriebenes Fahrzeug mit einer über eine Steuereinheit einstellbaren Übertragungskupplung am Beispiel eines grundsätzlich hinterradangetriebenen Kraftfahrzeugs mit über eine Übertragungskupplung zuschaltbarem Vorderradantrieb
- Fig. 2: Ausschnitte aus dem in der Steuereinheit enthaltenen möglichen Algorithmus zur Ermittlung des radschlupfabhängigen Soll-Kupplungsmoments

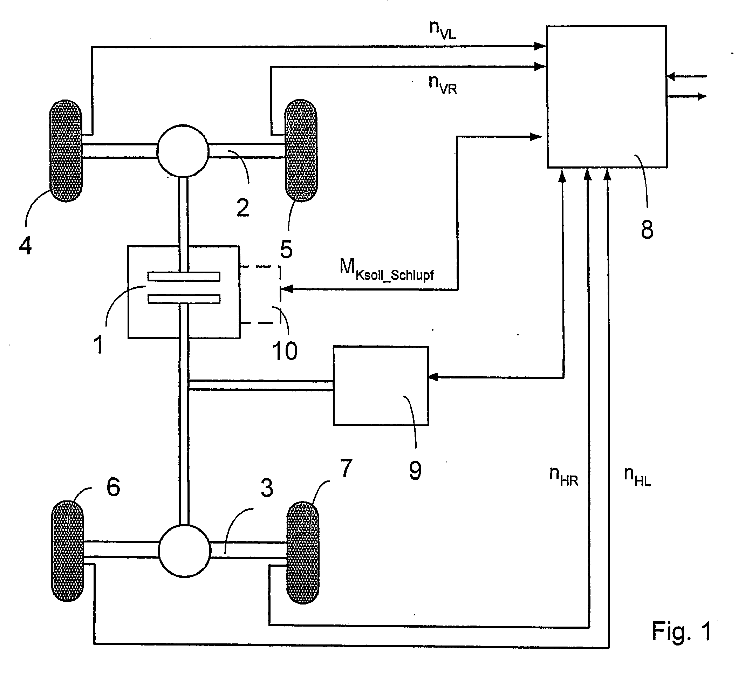

In Figur 1 ist ein zeitweise vierradgetriebenes Fahrzeug in Form eines grundsätzlich hinterradangetriebenen Kraftfahrzeugs mit bedarfsweise über eine Übertragungskupplung 1 zuschaltbarem Vorderradantrieb dargestellt. Die Übertragungskupplung 1 ist über eine Steuereinheit 8 einstellbar. Die Steuereinheit 8 kann ein ausgelagertes Zusatzsteuergerät 10, das beispielsweise das vorgegeben Soll-Kupplungsmoment in einen Strom zur Ansteuerung der Verstelleinheit (hier nicht extra dargestellt) der Übertragungskupplung 1 umsetzt, enthalten.

Bei einem Fahrzeug nach Fig. 1 wird mit offener Übertragungskupplung 1 das gesamte Drehmoment (Antriebsmoment) der Antriebseinheit 9, vorzugsweise bestehend aus einer Brennkraftmaschine, einem Getriebe und mindestens einem Antriebssteuergerät, auf die Räder 6 und 7 der Hinterachse 3 übertragen. Hier sind die Hinterräder 6 und 7 die primären Antriebsräder, da sie permanent mit der Antriebseinheit 9 verbunden sind. Mit zunehmendem Kupplungsmoment an der Übertragungskupplung 1 treibt die Antriebseinheit 9 auch die Räder 4 und 5 der Vorderachse 2 an. Somit sind die Vorderräder 4 und 5 die sekundären Antriebsräder.

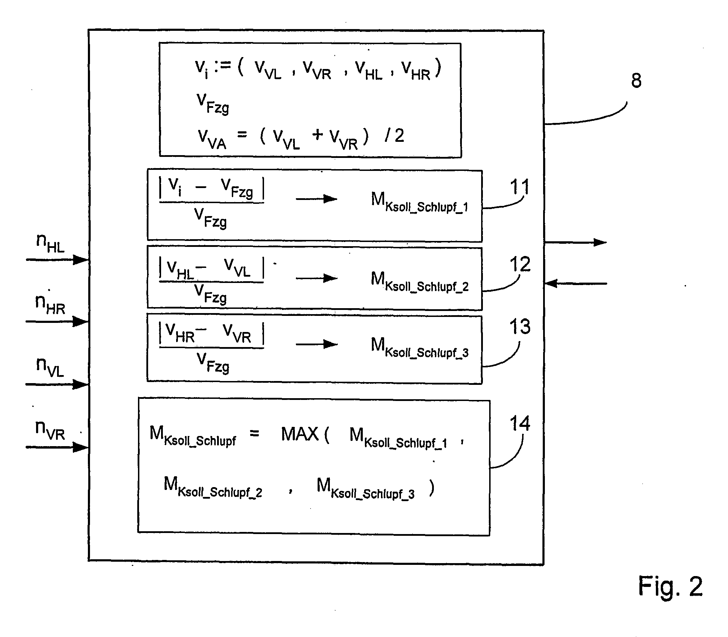

Die Steuereinheit 8 erfasst zu weiteren Eingangssignalen hinzu insbesondere die Raddrehzahlen n_{VL}, n_{HL}, n_{VR}, n_{HR} aller Räder 4, 5, 6, 7. Aus diesen Raddrehzahlen n_{VL}, n_{HL}, n_{VR}, n_{HR} werden im Zusammenhang mit weiteren in der Steuereinheit 8 vorliegenden Informationen, wie z. B. den Reifenumfängen, die Radgeschwindigkeiten v_{VL}, v_{HL}; v_{VR}, v_{HR} aller Räder 4, 5, 6, 7. sowie die Fahrzeuggeschwindigkeit v_{Fzg} ermittelt (vgl. auch Fig. 2).

In Fig. 2 sind weitere zur Realisierung der Erfindung erforderliche Details der Steuereinheit 8 gezeigt.

Zur Verteilung des Antriebsmoments der Antriebseinheit 9 wird ein einzustellendes Kupplungsmoment M_{Ksoll_Schlupf} für die zwischen der Antriebseinheit 9 bzw. den primären Antriebsrädern 6 und 7 und den sekundären Antriebsrädern 4 und 5 angeordneten Übertragungskupplung 1 vorgegeben. Grundsätzlich wird das Kupplungsmoment erhöht, wenn zwischen der Radgeschwindigkeit v_{VL} oder v_{VR} oder v_{HL} oder v_{HR} eines Rades 4 oder 5 oder 6 oder 7 und der Fahrzeuggeschwindigkeit v_{Fzg} eine Differenz erfasst wird. Alternativ oder zusätzlich wird das Kupplungsmoment erhöht, wenn zwischen den beiden Radgeschwindigkeit v_{VL} und v_{HL} oder v_{VR} und v_{HR} der Räder zumindest einer Fahrzeugseite 4 und 6 oder 5 und 7 eine Differenz erfasst wird.

Zur Vereinfachung des mathematischen Vorgehens werden die Differenzen als Relativwerte in Prozent beispielsweise entsprechend den in Fig. 2 gezeigten Rechenblöcken 11 bis 13 ermittelt: Im Rechenblock 11 wird der Betrag der relativen Differenz zwischen den einzelnen Radgeschwindigkeit vᵢ (:=v_{VL}, v_{HL}, v_{VR}, v_{HR}) eines Rades und der Fahrzeuggeschwindigkeit v_{Fzg} bezogen auf die Fahrzeuggeschwindigkeit v_{Fzg} bestimmt. Im Rechenblock 12 wird der Betrag der relativen Differenz zwischen den beiden Radgeschwindigkeit v_{VL} und v_{HL} der Räder.4 und 6 der linken Fahrzeugseite bezogen auf die Fahrzeuggeschwindigkeit v_{Fzg} bestimmt. Im Rechenblock 12 wird der Betrag der relativen Differenz zwischen den beiden Radgeschwindigkeit v_{VR} und v_{HR} der Räder 5 und 7 der rechten Fahrzeugseite bezogen auf die Fahrzeuggeschwindigkeit v_{Fzg} bestimmt.

Das radschlupfabhängige Soll-Kupplungsmoment M_{Ksol_Schlupf} zur Kupplungsmomenterhöhung ergibt sich im Rechenblock 14 aus einer Maximalauswahl (MAX) aus den drei Soll-Kupplungsmomenten M_{Ksoll_Schlupf_1}, M_{Ksoll_Schlupf_2}, M_{Ksoll_Schlupf_3}. Das erste Soll-Kupplungsmoment M_{Ksoll_Suhlupf_1} wird abhängig vom im Rechenblock 11 ermittelten relativen Differenz-Betrag bestimmt. Das zweite Soll-Kupplungsmoment M_{Ksoll_Schlupf_2} wird abhängig vom im Rechenblock 12 ermittelten relativen Differenz-Betrag bestimmt. Das dritte Soll-Kupplungsmoment M_{Ksoll_Sculupf_3} wird abhängig vom im Rechenblock 13 ermittelten relativen Differenz-Betrag bestimmt.

## Patentansprüche

1. Steuersystem für ein zumindest zeitweise vierradgetriebenes Kraftfahrzeug mit einer Steuereinheit, die den Radgeschwindigkeiten aller Räder proportionale Größen und die Fahrzeuggeschwindigkeit erfasst oder ermittelt, und mittels der das Antriebsmoment einer Antriebseinheit auf primäre Antriebsräder, die permanent mit der Antriebseinheit verbunden sind, und auf sekundäre Antriebsräder, die bedarfsweise mit der Antriebseinheit verbindbar sind, variabel verteilbar ist, wobei zur Verteilung des Antriebsmoments ein Kupplungsmoment (M_{Ksoll}) einer zwischen der Antriebseinheit (9) und den sekundären Antriebsrädern (4, 5) angeordneten Übertragungskupplung (1) mittels der Steuereinheit (8; 8, 10) eingestellt wird, **dadurch gekennzeichnet, dass** die Steuereinheit (8; 8, 10) derart ausgestaltet ist, dass das Kupplungsmoment (M_{Ksoll}) erhöht wird, wenn zwischen der Radgeschwindigkeit (v_{VL}, v_{VR}, v_{HL}, v_{HR}) eines Rades (4, 5, 6, 7) und der Fahrzeuggeschwindigkeit (v_{Fzg}) eine vorgegebene Differenz erfasst wird und/oder wenn zwischen den beiden Radgeschwindigkeit (v_{VL}, v_{HL}; v_{VR}, v_{HR}) der Räder zumindest einer Fahrzeugseite (4, 6; 5, 7) eine vorgegebene Differenz erfasst wird, wobei die Steuereinheit (8; 8, 10) zur Kupplungsmomenterhöhung ein radschlupfabhängiges Soll-Kupplungsmoment (M_{Ksoll_Schlupf}) vorgibt, das sich aus einer Maximalauswahl aus zumindest drei Soll-Kupplungsmomenten (M_{Ksoll_Schlupf_1}, M_{Ksoll_Schlupf_2}, M_{Ksoll_Schlupf_3}) ergibt, einem ersten Soll-Kupplungsmoment (M_{Ksoll_Schlupt_1}), das abhängig vom Betrag der Differenz zwischen der Radgeschwindigkeit (v_{VL}, v_{HL}, v_{VR}, v_{HR}) eines Rades und der Fahrzeuggeschwindigkeit (v_{Fzg}) bestimmt wird, einem zweiten Soll-Kupplungsmoment (M_{Ksoll_Suhlupf_2}), das abhängig vom Betrag der Differenz zwischen den beiden Radgeschwindigkeiten (v_{VL}, v_{HL}) der Räder (4, 6) der linken Fahrzeugseite bestimmt wird, und einem dritten Soll-Kupplungsmoment (M_{Ksoll_Sculupf_3}), das abhängig vom Betrag der Differenz zwischen den beiden Radgeschwindigkeiten (v_{VR}, v_{HR}) der Räder (5, 7) der rechten Fahrzeugseite bestimmt wird.

## Claims

1. A control system for an at least temporarily four-wheel drive motor vehicle with a control unit, which detects or determines variables proportional to the wheel speeds of all wheels and the vehicle speed, and by means of which the drive torque of a drive unit can be variously distributed to primary drive wheels, which are permanently connected to the drive unit, and to secondary drive wheels, which can be connected as necessary to the drive unit, wherein for the distribution of the drive torque, a clutch torque (M_{Kdesired}) of a transfer clutch (1) arranged between the drive unit (9) and the secondary drive wheels (4, 5) is adjusted by means of the control unit (8; 8, 10), **characterised in that** the control unit (8; 8, 10) is configured in such a way that the clutch torque (M_{Kdesired}) is increased if a defined difference is detected between the wheel speed (v_{VL}, v_{VR}, v_{HL}, v_{HR}) of a wheel (4, 5, 6, 7) and the vehicle speed (vᵥₑₕ) and/or a defined difference is detected between the two wheel speeds (v_{VL}, v_{HL}; v_{VR}, v_{HR}) of the wheels of at least one vehicle side (4, 6; 5, 7), the control unit (8; 8, 10), to increase the clutch torque, defining a wheel slip-dependent desired clutch torque (M_{Kdesired_slip}), which is obtained from a maximal selection of at least three desired clutch torques (M_{Kdesired_slip_1}, M_{Kdesired_slip_2}, M_{Kdesired_slip_3}), a first desired clutch torque (M_{Kdesired_slip_1}), which is determined as a function of the amount of the difference between the wheel speed (v_{VL}, v_{HL}, v_{VR}, v_{HR}) of a wheel and the vehicle speed (vᵥₑₕ), a second desired clutch torque (M_{Kdesired_slip_2}), which is determined as a function of the amount of the difference between the two wheel speeds (v_{VL}, v_{HL}) of the wheels (4, 6) of the left-hand vehicle side, and a third desired clutch torque (M_{Kdesired_slip_3}), which is determined as a function of the amount of the difference between the two wheels speeds (v_{VR}, v_{HR}) of the wheels (5, 7) of the right-hand vehicle side.

## Revendications

1. Système de commande pour véhicule automobile entraîné au moins temporairement par quatre roues motrices par l'intermédiaire d'une unité de commande qui saisit ou établit des grandeurs proportionnelles aux vitesses de toutes les roues ainsi que la vitesse du véhicule, et qui répartit de manière variable le couple qu'une unité d'entraînement transmet aux roues primaires d'entraînement reliées en permanence à cette unité, et aux roues secondaires d'entraînement qui peuvent être reliées si besoin à cette unité, et pour répartir le couple d'entraînement, une unité de commande (8 ; 8, 10) règle un couple d'entraînement (M_{Ksoll}) d'un accouplement d'entraînement (1) disposé entre l'unité d'entraînement (9) et les roues secondaires d'entraînement (4, 5),
**caractérisé en ce que**
l'unité de commande (8 ; 8, 10) est constituée de manière que le couple d'accouplement (M_{Ksoll}) est augmenté quand entre la vitesse (v_{VL}, v_{VR}, v_{HL}, v_{HR}) d'une roue (4, 5, 6, 7) et la vitesse du véhicule (v_{Fzg}) est saisie une différence prédéfinie et/ou quand entre les vitesses (v_{VL}, v_{HL} ; v_{VR}, v_{HR}) des roues situées sur au moins un côté du véhicule (4, 6 ; 5, 7) est saisie une différence,
l'unité de commande (8 ; 8, 10), pour augmenter le couple d'accouplement, prédéfinit un couple d'accouplement de consigne (M_{Ksoll_Schlupf}) en fonction du patinage de roue, qui résulte de la sélection d'un maximum à partir d'au moins trois couples d'accouplement de consigne (M_{Ksoll_Schlupf-1}, M_{Ksoll_Suhlupf_2}, M_{Ksoll_Schulpf_3}), le premier couple d'accouplement de consigne (M_{Ksoll_Schlupf-1}) étant déterminé en fonction du montant de la différence entre la vitesse (v_{VL}, v_{HL}, v_{VR}, v_{HR}) d'une roue et la vitesse du véhicule (v_{Fzg}), le deuxième couple d'accouplement de consigne (M_{Ksoll_Schlupf_2}) étant déterminé en fonction du montant de la différence entre les vitesses (v_{VL}, v_{HL}) des roues (4, 6) situées sur le côté gauche du véhicule, le troisième couple d'accouplement de consigne (M_{Ksoll_Schlupf_3}) étant déterminé en fonction du montant de la différence entre la vitesse (v_{VR}, v_{HR}) des roues (5, 7) situées sur le côté droit du véhicule.
